# EUROPEAN PATENT APPLICATION

(11) **EP 3 330 232 A1**
(43) Date of publication of application: **06.06.2018**
(21) Application number: 16830226.3
(22) Date of filing: 29.06.2016
(51) Int. Cl.: C03B 19/00, C03B 8/00, C03B 8/02, C03B 19/12, C03C 17/23, C03C 17/27, C08J 3/00, C08K 3/22, C08K 3/34, C08L 29/04, H01M 8/02, H01M 8/12

(54) **METHOD OF PRODUCING INORGANIC OXIDE MOLDED BODY**

(30) Priority: 27.07.2015 JP 2015148098
(71) Applicant: Nippon Kodoshi Corporation, Kochi-shi, Kochi 781-0395 (JP)
(72) Inventor: SAWA Haruo, Kochi-shi Kochi 781-0395 (JP); SASHIKA Masatoshi, Kochi-shi Kochi 781-0395 (JP)
(74) Representative: Betten & Resch
(86) International application number: PCT/JP2016/069329
(87) International publication number: WO 2017/018121

(57) **Abstract**

It is difficult to obtain a glassy, monolithic molded body of an inorganic oxide with a high melting point and softening point. Although molding by sintering is possible, it is hard to obtain a molded body which is transparent and has high barrier properties. Further, producing molded bodies with the sol-gel process is costly, and it is difficult to produce a molded bodies of large size. In this invention, a molded body principally composed of inorganic oxides is produced with a method that involves a step in which an inorganic-organic hybrid compound, formed by an organic polymer having a hydroxyl group chemically bonding with an inorganic oxide or a derivative thereof, is heated in an atmosphere in which oxygen is present, and the organic polymer component of the inorganic-organic hybrid compound is oxidized and removed.

## Description

### Technical Field

The present invention relates to a method of producing an inorganic oxide molded body in which a glassy and monolithic molded body of an inorganic oxide is produced at a low temperature.

### Background Art

Many inorganic oxide molded bodies are used domestically and industrially and play important roles. A typical one is glass, which is composed of inorganic oxides, mainly silica and compounds containing silica, and used for building windows, containers such as cups and bottles, glass fibers for optical communications, structures such as fiber reinforced plastics (FRPs), lenses for eyeglasses and optical instruments, mirrors, and the like. These applications of glass, in many cases, take advantage of the properties of glass, such as capability of transmitting light, i.e., transparency, denseness, and barrier properties. For example, glass is used for display surfaces of organic EL devices which require high barrier properties against moisture and oxygen and need to be transparent. For glass to have light transmittance, it is required that glass is a monolithic body (has no grain boundaries) or constituent particles are small compared to the wavelength of light. Furthermore, regarding denseness, it is required that glass is a monolithic body or fine constituent particles are densely bound together.

Another large feature of glass materials currently used is that they can be molded by heating. In order to produce a molded body having a desired shape, generally, a method in which a material is softened or melted by heating so as to be imparted with fluidity is used. In order to soften or melt a glass material, it is necessary to treat the material at a high temperature of 700°C to 1,500°C. However, there are a limited number of inorganic oxides that can be softened at 1,500°C or lower, and it is considered that the glass materials currently used are special materials that can be easily softened and molded by heating.

There are rather few inorganic oxides that are softened and melted at relatively low temperatures as in the existing glass materials, and many inorganic oxides have such a high melting point or softening point that it is practically difficult to mold them through a melting process. Inorganic molded bodies having such a high melting point are also used domestically and industrially; however, many of them are molded by compacting inorganic oxide powder. Typically, inorganic oxide powder is sintered by heating at a high temperature to obtain a molded body, and examples thereof include ferrite magnets, barium titanate used for capacitors, zinc oxide semiconductor varistors, abrasives such as alumina, high-temperature superconductors, post crowns, and the like. Many of materials generally referred to as ceramics correspond to this category.

Regarding functional materials, for example, as the electrolyte of a solid oxide fuel cell (SOFC), which is a high-temperature operation type fuel cell, zirconium oxide, more particularly, yttrium-stabilized zirconium oxide (YSZ), is mainly used. In a fuel cell, in accordance with the reactions (1) and (2) shown below, electrons move from hydrogen, which is separated by an electrolyte, to oxygen; thus an electric current flows. At this time, in the electrolyte, oxygen ions are conducted from a cathode to which oxygen is supplied to a cathode to which hydrogen is supplied.

H₂ + O²⁻ → H₂O + 2e⁻ · · · · · (1)

1/2O₂ + 2e⁻ → O²⁻ ..... (2)

Accordingly, the electrolyte is required to have two functions: a function of separating oxygen (air) from hydrogen to prevent mixing, and a function of conducting oxygen ions.

Other examples of molded bodies obtained by compacting inorganic oxide powder include cement molded bodies, architectural calcium silicate boards, and the like. In these molded bodies, particles are bound together by formation of a new compound on particle surfaces due to a reaction with water.

As a method of producing an inorganic oxide molded body, in particular, a glassy, monolithic molded body, at a lower temperature, a sol-gel method can be mentioned. This method uses a metal alkoxide as a raw material, and utilizes a property of inorganic oxide molecules generated by hydrolysis of the metal alkoxide, in which the inorganic oxide molecules are spontaneously interconnected to form a molded body. That is, this is a method in which a molded body is constructed by assembling small inorganic oxide molecules. In this method, since a melting process is not involved, it is possible to produce a glassy, monolithic molded body of an inorganic oxide with a high melting point.

On the other hand, although different from pure inorganic oxides, there are inorganic-organic hybrid materials used as molded bodies containing an inorganic oxide. For example, inorganic-organic hybrid materials in which a silicate compound, tungstic acid compound, molybdic acid compound, stannic acid compound, or zirconic acid compound is combined with polyvinyl alcohol are proposed (refer to PTL 1 to PTL 6). These inorganic-organic hybrid materials are produced by using an ordinary inorganic salt or oxoacid salt, inexpensive polyvinyl alcohol, and the like as raw materials, and the raw material cost is not very high. Furthermore, since such inorganic-organic hybrid materials can be produced by a simple production method including reactions in an aqueous solution, the production cost is low, and also the method is environmentally friendly.

### Citation List

### Patent Literature

PTL 1: Japanese Patent No. 4832670
PTL 2: Japanese Patent No. 3889605
PTL 3: Japanese Patent No. 3856699
PTL 4: Japanese Patent No. 3848882
PTL 5: Japanese Patent No. 4081343
PTL 6: Japanese Patent No. 5095249

### Summary of Invention

### Technical Problem

Among inorganic oxides, those currently used as glass can be softened or melted by heating, and it is possible to relatively easily obtain a monolithic molded body which is transparent and dense and has a certain degree of strength. However, types of glassy, inorganic oxide molded body that can be molded by heating, as in the glass materials, are extremely limited. Furthermore, there is another problem. A heat treatment at a quite high temperature of 700°C to 1,500°C is necessary to mold the glass, and during processing, materials that can be used together therewith are limited in terms of heat resistance. Accordingly, even in the glass materials that can be relatively easily molded, a further reduction in processing temperature is desired.

Many inorganic oxides other than glass materials have a higher softening temperature or melting point and a temperature exceeding 1,500°C is required. Therefore, it becomes further difficult to process and mold such inorganic oxides into glassy, monolithic bodies by softening or melting. Accordingly, as described above, a method in which a molded body is obtained by compacting powder by sintering is employed. However, in this method, powder particles are merely connected together, which is different from a glassy, monolithic molded body. Furthermore, in the case of sintering, heating at a temperature that is substantially equal to the melting temperature of commonly used glass is necessary, and it takes time to bind particles together by sintering, resulting in poor production efficiency. A sintered body is intrinsically brittle because basically, powder particles are connected only at surfaces in the sintered body, and in order to obtain higher strength, heating is required at a higher temperature for a long period of time.

In the method in which a molded body is obtained by sintering, it is not easy to reduce the particle size of inorganic oxide powder, which is a raw material, to a level of fine particles, such as nanoparticles. In general, the molded body is composed of powder with a large particle size relative to the wavelength of light. The particles remain as particles even after sintering, and also grain boundaries are present. Therefore, transparency cannot be obtained. Furthermore, since it is difficult to densely bind particles together, many molded bodies are porous, and it is difficult to form a dense structure. An electrolyte composed of YSZ or the like used in an SOFC needs to prevent gas from permeating therethrough, and therefore, particles that are as fine as possible are used and densely sintered. However, in recent years, a decrease in the operating temperature of SOFCs has been desired, and therefore, a need has arisen to decrease the thickness of the electrolyte layer to several microns. In such a case, gas permeation through grain boundaries gives rise to a problem. However, since the melting point of zirconium oxide is close to 3,000°C, it is difficult to practically produce a glassy, monolithic molded body through a melting process, even only to select a furnace material.

Regarding the type of molded body, such as a cement molded body or architectural calcium silicate board, in which particles are bound together by formation of a new compound on particle surfaces due to a reaction with water, it is difficult to obtain a molded body that is harder and denser than a sintered body. Furthermore, although there is an advantage in that the temperature during production is from normal temperature to about 150°C and molding at a low temperature is possible, a long production time is required. Architectural calcium silicate boards and the like are molded by a hydrothermal reaction under pressure, and a large closed pressure vessel that can endure pressurization is required, resulting in an increase in equipment cost.

In the sol-gel method, in which inorganic oxide molecules are assembled without undergoing a melting process, a high temperature is not required to obtain a glassy, monolithic molded body of an inorganic oxide. However, in this method, since formation of a molded body proceeds in a solvent, accompanied by a large physical change due to a chemical reaction, the molded body is likely to break during formation, and it is practically difficult to fabricate a large molded body. Furthermore, the alkoxide, which is a raw material, is expensive. Moreover, a large amount of an organic solvent is used in the production process, which is not environmentally friendly, and large-scale equipment is required for treatment thereof, resulting in an increase in production cost.

Regarding an inorganic-organic hybrid material, it is possible to produce a monolithic molded body which contains an inorganic oxide and which is transparent and dense at a low temperature, in a short time, by a simple method. However, this material is not a pure inorganic oxide, and chemical stability and heat resistance fall far short of those of a pure inorganic oxide.

As described above, regarding many inorganic oxides, it is difficult to produce a molded body, in particular, a glassy, monolithic molded body, and regarding the existing glass materials, the processing temperature is not very low, all of which are problems. Among inorganic oxide molded bodies, although some, such as magnetic materials and semiconductor material, need to be originally crystalline, many of them become practically applicable when they can be processed into glassy molded bodies. Examples thereof include inorganic oxide materials requiring high strength, thin inorganic oxide coating films, electrical insulators requiring high heat resistance, gas barrier materials, and high temperature observation windows. For example, in SOFCs and the like, if glassy, dense electrolytes become available, gas barrier properties will be obtained, even if thinner, low crystallinity will enhance ion conductivity, and lower temperature operation will become possible. However, in the existing techniques, it is impossible or costly to use inorganic oxides in these applications.

### Solution to Problem

The present invention has been made to solve the problems of the existing techniques and relates to a method of producing an inorganic oxide molded body including a step of heating an inorganic-organic hybrid compound, which is formed by chemically bonding an inorganic oxide or its derivative to a hydroxyl group-containing organic polymer, in an atmosphere containing oxygen to oxidize and remove the organic polymer component, thereby obtaining a molded body composed mainly of the inorganic oxide.

In this case, the inorganic oxide molded body can be a glassy, monolithic body.

The heating of the inorganic-organic hybrid compound in an atmosphere containing oxygen can be performed at a temperature of 600°C or lower.

The inorganic oxide is applicable, in particular, to an inorganic oxide having a melting point of 2,000°C or higher.

The inorganic oxide or its derivative preferably contains at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements, and more preferably contains at least zirconium or silicon. The hydroxyl group-containing organic polymer of the inorganic-organic hybrid compound is preferably polyvinyl alcohol.

The inorganic-organic hybrid compound can be obtained by neutralizing a salt or an oxoacid salt of at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements contained in the inorganic oxide or its derivative with an acid or an alkali, in the presence of the hydroxyl group-containing organic polymer. In the case where the inorganic oxide or its derivative contains zirconium or silicon, the inorganic-organic hybrid compound can be obtained by neutralizing a zirconium salt or oxyzirconium salt with an alkali in the presence of the hydroxyl group-containing organic polymer or by neutralizing a silicate with an acid in the presence of the hydroxyl group-containing organic polymer.

Furthermore, it is possible to obtain a film-shaped inorganic-organic hybrid compound by forming a mixture, in which both a salt or an oxoacid salt of at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements contained in the inorganic oxide or its derivative and the hydroxyl group-containing organic polymer are present, into a membrane shape through a step of applying the mixture a plurality of times, followed by neutralization with an acid or an alkali.

Furthermore, in the present invention, it is possible to obtain a membrane-shaped molded body composed mainly of the inorganic oxide by forming the inorganic-organic hybrid compound into a membrane shape through a step of applying the inorganic-organic hybrid compound a plurality of times, followed by a step of heating in an atmosphere containing oxygen to oxidize and remove the organic polymer component. The inorganic oxide molded body can be used as an electrolyte of a solid oxide fuel cell (SOFC), an inorganic oxide coating film, a gas barrier material, or a high temperature observation window.

### Advantageous Effects of Invention

According to the present invention, a molded body composed mainly of an inorganic oxide is obtained through a step of heating an inorganic-organic hybrid compound, which is formed by chemically bonding an inorganic oxide or its derivative to an organic polymer, in an atmosphere containing oxygen to oxidize and remove the organic polymer component of the inorganic-organic hybrid compound. A glassy, monolithic molded body of an inorganic oxide can be produced at a temperature lower than the molding temperature of the existing glass materials. Furthermore, the method of the present invention can produce a glassy, monolithic molded body merely by heating at a relatively low temperature even when using an inorganic oxide having a high melting point or softening point, which is normally molded only by the powder sintering method or the like. The resulting glassy, monolithic molded body can exhibit properties, such as high strength, transparency, and high gas barrier properties, compared with molded bodies produced by a powder sintering method. Furthermore, in this method, unlike the sol-gel method, the raw material and production costs for the inorganic-organic hybrid compound are low, and an organic solvent is not used, which is environmentally friendly.

### Brief Description of Drawings

[Fig. 1] Fig. 1 is a system chart schematically showing a first embodiment of a production process of an inorganic oxide molded body according to the present invention.
[Fig. 2] Fig. 2 is a system chart schematically showing a second embodiment of a production process of an inorganic oxide molded body according to the present invention.
[Fig. 3] Fig. 3A is an electron micrograph of a broken portion of a sample membrane of a zirconium oxide monolithic body produced by oxidizing and removing, in air at 500°C, an organic polymer component of a thin membrane-shaped zirconic acid compound-polyvinyl alcohol hybrid compound formed by applying one layer only; and Fig. 3B is an electron micrograph of a surface of a zirconium oxide membrane produced by oxidizing and removing, in air at 500°C, an organic polymer component of a zirconic acid compound-polyvinyl alcohol hybrid compound precursor formed by applying a plurality of layers.

### Description of Embodiments

Embodiments of a method of producing an inorganic oxide molded body according to the present invention will be described below.

The present invention relates basically to a method of producing an inorganic oxide molded body including a step of heating an inorganic-organic hybrid compound, which is formed by chemically bonding an inorganic oxide or its derivative to an organic polymer, in an atmosphere containing oxygen to oxidize and remove the organic polymer component, thereby obtaining a molded body composed mainly of the inorganic oxide.

The present invention aims at producing an inorganic oxide molded body, in particular, a glassy, monolithic body. Herein, the term "inorganic oxide" refers to all oxides, excluding organic compounds containing carbon and hydrogen as main components, among oxygen-containing compounds. Because of being a molded body, those which are not solid in the ordinary state are excluded. Furthermore, the term "inorganic oxide" is interpreted in a broad sense, and derivatives that can be considered to be derived from the basic oxide, for example, hydroxides, peroxides, oxoacids, or oxoacid salts, are also considered under the category of the inorganic oxide. For example, a calcium silicate compound, which is a silicate, can also be expressed as CaOₓ·SiO_{2y} and can also be regarded as a composite compound of calcium oxide and silicon oxide. Calcium hydroxide, which is a hydroxide, can also be expressed as CaO·H₂Oₓ and can also be regarded as a compound of calcium oxide and hydrogen oxide (water). All of these are under the category of the inorganic oxide in the present invention. However, the inorganic oxide needs to be able to chemically bond to a hydroxyl group-containing organic polymer.

In the present invention, the inorganic oxide or its derivative preferably contains at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements, and is an oxide thereof or its derivative. A plurality of these elements may be contained. More preferably, the inorganic oxide or its derivative is an oxide of zirconium or silicon or its derivative. Herein, the oxide of zirconium or its derivative is a compound containing ZrO₂ as a basic unit and refers to zirconium hydroxide, zirconic acid represented by general formula ZrO₂·xH₂O, or a derivative thereof in general. Accordingly, the oxide of zirconium or its derivative may be partially replaced by another element, and deviation from the stoichiometric composition or incorporation of an additive is permitted. The oxide of silicon or its derivative is a compound containing SiO₂ as a basic unit and refers to silicic acid represented by general formula SiO₂·xH₂O, or a derivative thereof in general. Accordingly, the oxide of silicon or its derivative may be partially replaced by another element, and deviation from the stoichiometric composition or incorporation of an additive is permitted.

In the present invention, the inorganic-organic hybrid compound is formed by chemically bonding the inorganic oxide or its derivative to molecules of a hydroxyl group-containing organic polymer. Thus, the organic polymer molecule needs a bond to the inorganic oxide and the hydroxyl group serves as the bond. In the case where the inorganic oxide or its derivative and the hydroxyl group-containing organic polymer form an inorganic-organic hybrid compound, the two are entangled at the molecular level and strongly bound to each other by hydrogen bonds and dehydration condensation through hydroxyl groups of the organic polymer. The hybrid compound is a compound and is distinguished from a mixture obtained by physical mixing of an organic polymer and an inorganic oxide or its derivative. That is, unlike the mixture, in the hybrid compound, the chemical properties of the individual components are not necessarily maintained after hybridization. For example, even in the case where a hydroxyl group-containing organic polymer alone is water-soluble, a hybrid compound formed with an inorganic oxide or its derivative is basically not soluble in water. Such a change in chemical properties after hybridization can indicate that the hybrid compound is different from a mixture obtained by physical mixing.

In the present invention, as the hydroxyl group-containing organic polymer, a cellulose derivative, polyvinyl alcohol, or the like may be used, but more preferable is polyvinyl alcohol. Herein, polyvinyl alcohol may not necessarily be perfect, and partial polyvinyl alcohol can be used as long as it functions essentially as polyvinyl alcohol. For example, polyvinyl alcohol whose hydroxyl group is partially replaced by another group or polyvinyl alcohol which is partially copolymerized with another polymer can also function as polyvinyl alcohol. Furthermore, the same effect will be obtained if polyvinyl alcohol is formed during the production process of the present invention. Therefore, polyvinyl acetate or the like which serves as a raw material for polyvinyl alcohol can be used as a starting material.

Polyvinyl alcohol, within a range in which its function is fully performed, may be mixed with other polymers, for example, with polyolefin-based polymers such as polyethylene and polypropylene, polyacrylic acid-based polymers, polyether-based polymers such as polyethylene oxide and polypropylene oxide, polyester-based polymers such as polyethylene terephthalate and polybutylene terephthalate, fluorine-based polymers such as polytetrafluoroethylene and polyvinylidene fluoride, sugar chain polymers such as methyl cellulose, polyvinyl acetate-based polymers, polystyrene-based polymers, polycarbonate-based polymers, and epoxy resin-based polymers, or other organic and inorganic additives.

In the present invention, an inorganic-organic hybrid compound is used as a precursor, and by oxidizing and removing the organic polymer component thereof, a molded body composed mainly of an inorganic oxide is obtained. When the amount of the inorganic oxide or its derivative is excessively small relative to the organic polymer in the inorganic-organic hybrid compound, volume shrinkage increases excessively when the organic polymer is oxidized and removed, and it becomes difficult to obtain a molded body having a desired size and shape. Contrarily, when the amount of the inorganic oxide or its derivative is excessively large, the inorganic-organic hybrid compound serving as a precursor becomes hard and brittle, and breakage is likely to occur before forming a molded body. Therefore, the ratio of the weight of the inorganic oxide or its derivative to the weight of the organic polymer in the hybrid compound is preferably controlled to be 0.1 to 10.

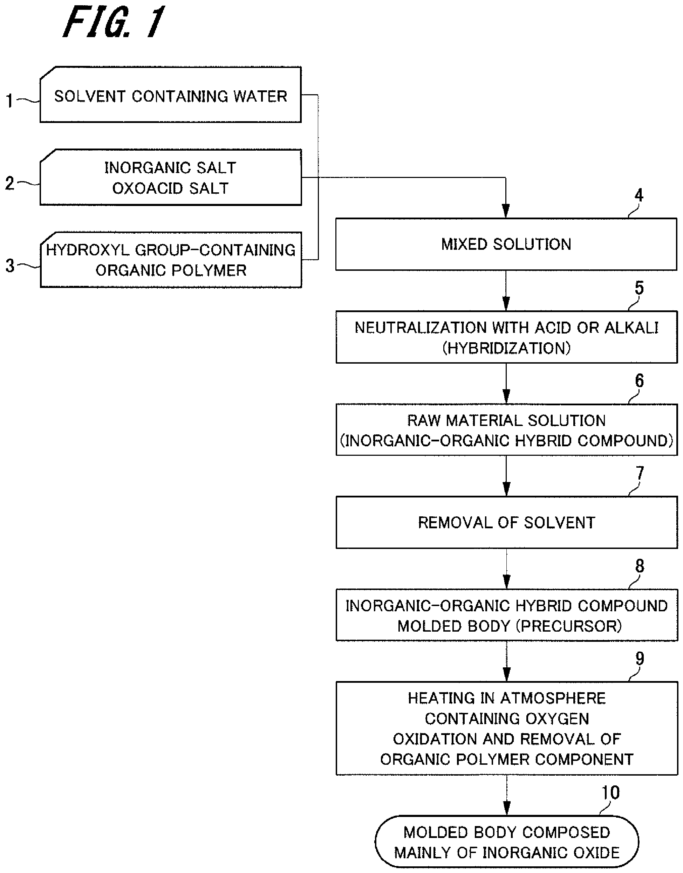

A production process of an inorganic oxide molded body according to the present invention will be described below. Fig. 1 is a system chart schematically showing a first embodiment of a production process of an inorganic-organic hybrid compound. First, as raw materials, a solvent containing water is prepared in Step 1, an inorganic salt or an oxoacid salt serving as a raw material is prepared in Step 2, and a hydroxyl group-containing organic polymer is prepared in Step 3. In Step 4, these raw materials are mixed to obtain a mixed solution in which both the inorganic salt or the oxoacid salt and the hydroxyl group-containing organic polymer are present in the solvent containing water. At this time, the inorganic salt, the oxoacid salt, or the hydroxyl group-containing organic polymer may have any composition, but preferably is water-soluble. For example, in the case where silica is finally obtained, a silicate or the like can be used in Step 2. In the case where zirconium oxide is finally obtained, a zirconium salt, oxyzirconium salt, or the like can be used in Step 2. Furthermore, for example, in the case where polyvinyl alcohol is used as the hydroxyl group-containing organic polymer in Step 3, in order to allow the subsequent step of getting rid of water and molding the precursor to be performed within a time range that is practical in terms of production, the polyvinyl alcohol concentration is preferably 5% by weight or more and more preferably 10% by weight or more in the mixed solution in Step 4.

Next, in Step 5, the inorganic salt or the oxoacid salt in the mixed solution is neutralized with an acid or an alkali, and in Step 6, a raw material solution after neutralization is obtained. Subsequently, in Step 7, the solvent is removed, and in Step 8, a molded body of the inorganic-organic hybrid compound is obtained. This molded body serves as a precursor to an inorganic oxide molded body.

In the mixed solution in Step 4 shown in Fig. 1, the inorganic salt or the oxoacid salt and the hydroxyl group-containing organic polymer are dissolved and mixed at the molecular level. In this state, when the neutralization operation is performed in Step 5, the inorganic salt or the oxoacid salt is neutralized to form an inorganic oxide or its derivative. The newly formed small particles of the inorganic oxide or its derivative are unstable and bond to hydroxyl groups when the hydroxyl group-containing organic polymer is present in the vicinity thereof. In such a manner, the particles of the inorganic oxide or its derivative are inhibited from growing due to bonding to the organic polymer and remain as nanoparticles. Therefore, in the precursor composed of the inorganic-organic hybrid compound obtained by the method described above, the inorganic oxide or its derivative is in the form of nanoparticles.

As described above, since the inorganic oxide or its derivative chemically bonds to the organic polymer, nanoparticles are formed. If an inorganic-organic mixture in which chemical bonding does not occur is used, even when the similar neutralization operation is performed, the inorganic oxide or its derivative will not be able to bond to the organic polymer, and therefore, nanoparticles with a small size will not be able to be stabilized as they are and will grow to be large. As will be described later, unless the inorganic oxide or its derivative remains as nanoparticles with a small size in the precursor, even when the organic polymer is subsequently oxidized and removed, it is not possible to obtain a glassy, monolithic molded body of an inorganic oxide in which particles are bound together. Therefore, it is important to use, as a precursor, an inorganic-organic hybrid compound in which the inorganic oxide or its derivative chemically bonds to the organic polymer, instead of a mixture. For example, an inorganic oxide that is originally water-soluble can be mixed as nanoparticles in an organic polymer and formed into a molded body, and then, the organic polymer can be oxidized and removed. However, in such a case, since the originally water-soluble inorganic oxide is used, even when molded, only a water-soluble body is obtained.

The acid used to neutralize the inorganic salt or the oxoacid salt in the raw material solution in Step 5 may be any acid that can perform such neutralization. Examples of the acid that can be used include hydrochloric acid, sulfuric acid, nitric acid, phosphoric acid, acetic acid, proton-type cation exchange resins, and the like. For example, in the case where silica is finally obtained, a silicate or the like is used in Step 2 and neutralization is performed by using these acids in Step 5.

The alkali used to neutralize the inorganic salt or the oxoacid salt in the raw material solution in Step 5 may be any alkali that can perform such neutralization. Examples of the alkali that can be used include sodium hydroxide, potassium hydroxide, lithium hydroxide, ammonia, calcium hydroxide, strontium hydroxide, barium hydroxide, carbonates, hydroxide ion type anion exchange resins, and the like. For example, in the case where zirconium oxide is finally obtained, a zirconium salt, oxyzirconium salt, or the like is used in Step 2 and neutralization is performed by using these alkalis in Step 5.

Note that the acids or the alkalis may be used alone or as a mixture of two or more of them.

In the present invention, such an inorganic-organic hybrid compound precursor is heated in an atmosphere containing oxygen, such as in air, and the organic polymer component only is removed by oxidation to thereby form a molded body composed mainly of an inorganic oxide. At this time, in the inorganic-organic hybrid compound, the inorganic oxide or its derivative is in the form of nanoparticles and unstable in a bare state after removal of the organic polymer, and therefore, the nanoparticles are bound together to form a molded body of the inorganic oxide. Since nanoparticles are particles having a very small size at the molecular level and small compared with the wavelength of visible light, the resulting molded body can be regarded as a glassy, monolithic body and has transparency. Furthermore, since nanoparticles have a lower melting point than the original inorganic oxide, there may be a case where in the process of oxidizing and removing the organic polymer component by heating, melting or softening actually occurs to form a glassy, monolithic molded body.
In general, the melting point refers to the melting temperature under the condition that many atoms constituting an inorganic oxide are assembled and each atom is surrounded by many layers of the other atoms, and stability (binding energy) under such a condition is reflected in the melting point. However, atoms at the surface are not completely surrounded by other atoms and therefore are unstable. In nanoparticles, since the proportion of atoms lying on the surface is very high, the binding energy as a whole decreases, resulting in a decrease in the melting point.

For such a reason, in the case where an inorganic oxide molded body is produced, through an inorganic-organic hybrid compound as a precursor, by oxidizing and removing the organic polymer, it is possible to obtain the molded body at a temperature that is lower than the melting point or softening point of the original inorganic oxide. Furthermore, regarding an inorganic oxide, such as zirconium oxide, which originally has an extremely high melting point or softening point and with which it is difficult to produce a glassy, monolithic molded body, it becomes possible to produce a glassy, monolithic molded body at a low temperature at a practical level. The step of obtaining an inorganic oxide by oxidizing and removing the organic polymer of the inorganic-organic hybrid compound precursor can also be carried out by heating the precursor in an environment at 600°C or lower. Since oxidation of the organic polymer is an exothermic process, spontaneous heat generation occurs in the step of removing by oxidation the organic polymer from the inorganic-organic hybrid compound. Thus, although the temperature of the inorganic-organic hybrid compound is momentarily increased, even when heat input is performed in an environment set at 600°C or lower, oxidation and removal of the organic polymer can be made to proceed.

The simplest molded body is a membrane-shaped body of an inorganic oxide, which can be obtained by forming an inorganic-organic hybrid compound precursor into a membrane shape and heating it in the presence of oxygen. Similarly, by forming an inorganic-organic hybrid compound precursor into a spherical (bead), rod, or fiber shape, or the like, it is possible to obtain a glassy, monolithic molded body of an inorganic oxide having the corresponding shape. When the content of the organic polymer in the inorganic-organic hybrid compound is high, there is a problem that volume shrinkage increases when the organic polymer is oxidized and removed, which may cause breakage or which may make it hard to form a molded body having a complex shape. In such a case, it is effective to mix a ready-made inorganic oxide powder of the same kind as the inorganic oxide of a molded body intended to be produced into the inorganic-organic hybrid compound. The ready-made inorganic oxide powder does not contain an organic polymer, and its volume does not substantially change even when heated, thus exhibiting an effect of decreasing the volume shrinkage of the entire inorganic-organic hybrid compound. Moreover, in some cases, during oxidation and removal of the organic polymer, in the process in which the inorganic oxide nanoparticles are bound together, the inorganic oxide nanoparticles may also be melted and assimilated with the ready-made inorganic oxide powder particles to, as a whole, form a monolithic molded body. Alternatively, in the case where a ready-made inorganic oxide solid in which a small amount of an inorganic-organic hybrid compound is contained is used as a precursor, inorganic oxide nanoparticles generated from the inorganic-organic hybrid compound after heating can serve as a binder for the ready-made inorganic oxide solid to, as a whole, form a molded body.

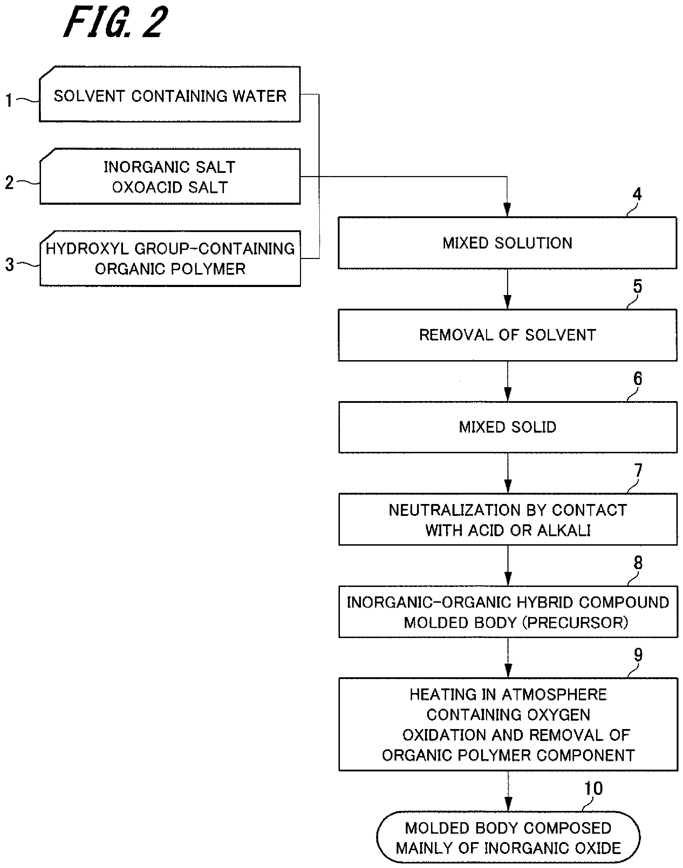

Fig. 2 is a system chart schematically showing a second embodiment of a production process of an inorganic oxide. By going through the same steps as those shown in Fig. 1, in Step 4, a mixed solution in which both the inorganic salt or the oxoacid salt and the hydroxyl group-containing organic polymer are present in the solvent containing water is obtained. Next, in Step 5, the solvent is removed; in Step 6, a mixed solid is obtained in which a mixture of the inorganic salt or the oxoacid salt and the hydroxyl group-containing organic polymer is molded; in Step 7, the mixed solid is brought into contact with an acid or an alkali to neutralize the inorganic salt or the oxoacid salt; and in Step 8, a molded body of an inorganic-organic hybrid compound is obtained. This molded body serves as a precursor to an inorganic oxide molded body. The steps after molding of the inorganic-organic hybrid compound precursor are the same as those shown in Fig. 1. In Step 6, as the method of bringing the mixed solid into contact with an acid or an alkali, a method of immersing in an acid or an alkali solution, a method in which an acid or an alkali solution is applied or sprayed to the mixed solid obtained in Step 6, or a method of exposing to vapor may be used. In the neutralization process in Step 7 shown in Fig. 2, in accordance with the same principle as that in the case of Fig. 1, hybridization proceeds, and the inorganic oxide or its derivative remains as nanoparticles.

Examples of a method of producing an inorganic oxide molded body according to the present invention will be described below. It is to be understood that the invention of the present application is not limited to the contents described in the examples.

### (Example 1)

A method of producing an inorganic oxide molded body according to the present invention will be shown, in which a zirconium oxide molded body is taken as an example. The method in this example can also be applied to inorganic oxides other than zirconium oxide. This method is carried out in accordance with the production flow shown in Fig. 1. A solution obtained by dissolving 1.2 g of zirconium oxychloride octahydrate in 30 ml of water and a solution obtained by dissolving 0.5 g of trisodium phosphate in 22 ml of water were added to 16.7 g of a 12 wt% aqueous solution of polyvinyl alcohol (degree of polymerization: 3,100 to 3,900, degree of saponification: 86% to 90%), followed by mixing. While stirring the mixed solution, a NaOH aqueous solution with a concentration of 1 N was added thereto until the pH reached 6, and zirconium oxychloride was neutralized to obtain a raw material solution. By this operation, zirconium oxychloride was converted into a zirconic acid compound and hybridized with polyvinyl alcohol.

After the neutralization operation, the raw material solution was applied onto a glass substrate by using a spin coater under the conditions of 2,000 rpm and 60 seconds, and drying was performed by heating at 80°C, followed by heating at 130°C. Thereby, a membrane-shaped precursor composed of a zirconic acid compound-polyvinyl alcohol hybrid compound was obtained. Where necessary, the operation of applying the raw material solution by using the spin coater, followed by heating was further repeated a plurality of times. Then, the film-shaped precursor composed of the hybrid compound was heated in air at 500°C for 30 minutes to oxidize and remove polyvinyl alcohol. Thereby, a film-shaped molded body of zirconium oxide was obtained. The resulting film-shaped molded body is a transparent, glass-like, monolithic body.

In this state, all of the polyvinyl alcohol was oxidized and removed, and the molded body is composed only of zirconium oxide. That is, it was confirmed that a glassy, monolithic molded body of zirconium oxide originally having a melting point close to 3,000°C was formed at a temperature of 500°C or lower.

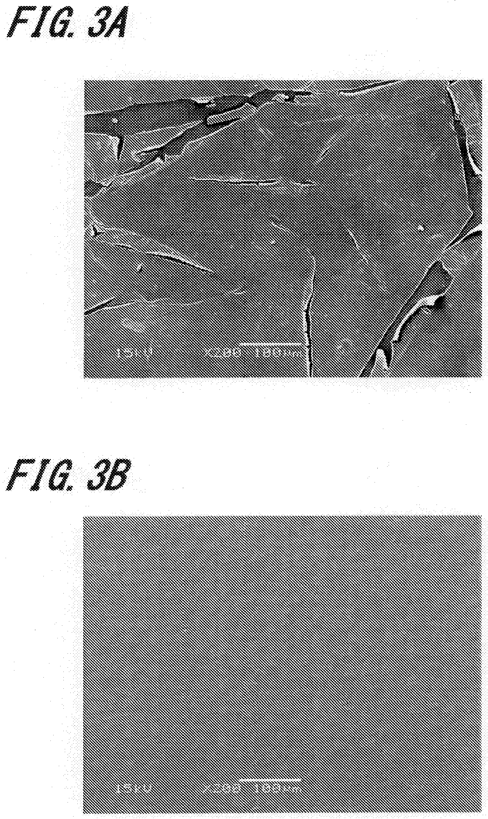

Regarding a sample (zirconium oxide monolithic membrane) produced by forming a thin film of a zirconic acid compound-polyvinyl alcohol hybrid compound by a single application with a spin coater and heating the thin film in air at 500°C to oxidize and remove polyvinyl alcohol, i.e., an organic polymer component, in order to confirm the presence of a membrane-shaped body, a broken portion was dared to be photographed. The resulting electron micrograph is shown in Fig. 3A.

As shown in Fig. 3A, in the case of application of one layer only, breakage of the membrane is likely to occur.

Furthermore, Fig. 3B shows an electron micrograph of a surface of a zirconium oxide membrane produced by oxidizing and removing, in air at 500°C, an organic polymer component of a zirconic acid compound-polyvinyl alcohol hybrid compound precursor formed by applying a plurality of layers in Example 1.

As shown in Fig. 3B, by applying a plurality of layers in an overlapping manner, breakage becomes unlikely to occur, and a molded body which is overall continuous without a break can be easily produced.

### (Example 2)

The same operation as that of Example 1 was performed except that 5 g of a 4.5 wt% aqueous solution of sodium silicate was used instead of the zirconium oxychloride octahydrate of Example 1, and neutralization was performed by using a hydrochloric acid aqueous solution with a concentration of 2.4 N. In this case, a membrane-shaped precursor composed of a silicate compound-polyvinyl alcohol hybrid compound was formed. By heating the precursor in air, a film-shaped molded body of silica was produced. As in zirconium oxide in Example, a glassy molded body of silica originally having a melting point of 1,000°C or higher was obtained at a temperature of 500°C or lower.

### (Example 3)

A method of producing an inorganic oxide molded body in accordance with the production flow shown in Fig. 2 according to the present invention will be shown, in which a zirconium oxide molded body is taken as an example. The method in this example can also be applied to inorganic oxides other than zirconium oxide. A solution obtained by dissolving 1.2 g of zirconium oxychloride octahydrate in 30 cc of water was added to 16.7 g of a 12 wt% aqueous solution of polyvinyl alcohol (degree of polymerization: 3,100 to 3,900, degree of saponification: 86% to 90%), followed by mixing. The mixed solution was applied onto a glass substrate by using a spin coater under the conditions of 2,000 rpm and 60 seconds, and drying was performed by heating at 80°C. Where necessary, the operation of applying the raw material solution by using the spin coater, followed by heating was further repeated a plurality of times. After drying, immersion in a NaOH aqueous solution with a concentration of 1 N was performed to neutralize zirconium oxychloride. By this operation, zirconium oxychloride was converted into a zirconic acid compound and hybridized with polyvinyl alcohol. Subsequently, by washing with water and heating at 130°C, a membrane-shaped precursor composed of a zirconic acid compound-polyvinyl alcohol hybrid compound was obtained. Then, by heating the membrane-shaped precursor of the hybrid compound in air at 500°C for 30 minutes, polyvinyl alcohol was oxidized and removed to obtain a membrane-shaped molded body of zirconium oxide. By such a production process, the same glassy molded body of zirconium oxide as that of Example 1 was obtained.

### Industrial Applicability

As described above, the present invention relates to a method including a step of heating an inorganic-organic hybrid compound, which is formed by chemically bonding an inorganic oxide or its derivative to a hydroxyl group-containing organic polymer, in an atmosphere containing oxygen to oxidize and remove the organic polymer component of the inorganic-organic hybrid compound, thereby obtaining a molded body composed mainly of the inorganic oxide. According to this method, it is possible to form a glassy, monolithic molded body of an inorganic oxide at a lower temperature, in particular, at a temperature of 600°C or lower; and regarding inorganic oxides which have a high melting point or softening point and with which it has been difficult to produce a glassy, monolithic molded body, it is possible to obtain a glassy, monolithic molded body having properties, such as transparency, high barrier properties, and high strength. Furthermore, this method can be used to produce, with low costs, a larger molded body, compared with the existing methods, such as a sol-gel method, and is environmentally friendly. Inorganic oxide molded bodies obtained by the method of the present invention can be applied to inorganic oxide materials requiring high strength, thin inorganic oxide coating films, electrical insulators requiring high heat resistance, gas barrier materials, high temperature observation windows, electrolytes of SOFCs that can be operated at low temperatures, and the like.

## Claims

1. A method of producing an inorganic oxide molded body comprising a step of heating an inorganic-organic hybrid compound, which is formed by chemically bonding an inorganic oxide or its derivative to a hydroxyl group-containing organic polymer, in an atmosphere containing oxygen to oxidize and remove an organic polymer component of the inorganic-organic hybrid compound, thereby obtaining a molded body composed mainly of the inorganic oxide.

2. The method of producing an inorganic oxide molded body according to Claim 1, **characterized in that** the inorganic oxide molded body is a glassy, monolithic body.

3. The method of producing an inorganic oxide molded body according to Claim 1, wherein the heating in an atmosphere containing oxygen is performed at a temperature of 600°C or lower.

4. The method of producing an inorganic oxide molded body according to Claim 1, wherein the inorganic oxide is an inorganic oxide having a melting point of 2,000°C or higher in the normal state.

5. The method of producing an inorganic oxide molded body according to Claim 1, wherein the inorganic oxide or its derivative contains at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements.

6. The method of producing an inorganic oxide molded body according to Claim 5, wherein the inorganic-organic hybrid compound is obtained by neutralizing a salt or an oxoacid salt of at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements contained in the inorganic oxide or its derivative with an acid or an alkali, in the presence of the hydroxyl group-containing organic polymer.

7. The method of producing an inorganic oxide molded body according to Claim 1, wherein the inorganic oxide or its derivative contains zirconium or silicon.

8. The method of producing an inorganic oxide molded body according to Claim 7, wherein the inorganic-organic hybrid compound is obtained by neutralizing a zirconium salt or oxyzirconium salt with an alkali in the presence of the hydroxyl group-containing organic polymer or by neutralizing a silicate with an acid in the presence of the hydroxyl group-containing organic polymer.

9. The method of producing an inorganic oxide molded body according to Claim 1, wherein the organic polymer is polyvinyl alcohol.

10. The method of producing an inorganic oxide molded body according to Claim 6, wherein the inorganic-organic hybrid compound that is membrane-shaped is obtained by forming a mixture, in which both a salt or an oxoacid salt of at least one element selected from the group consisting of magnesium, aluminum, silicon, calcium, titanium, vanadium, manganese, iron, cobalt, nickel, copper, zinc, strontium, yttrium, zirconium, niobium, molybdenum, silver, tin, antimony, hafnium, tantalum, tungsten, lead, and rare-earth elements contained in the inorganic oxide or its derivative and the hydroxyl group-containing organic polymer are present, into a membrane shape through a step of applying the mixture a plurality of times, followed by neutralization with an acid or an alkali.

11. The method of producing an inorganic oxide molded body according to Claim 1, wherein the molded body composed mainly of the inorganic oxide that is membrane-shaped is obtained by forming the inorganic-organic hybrid compound into a membrane shape through a step of applying the inorganic-organic hybrid compound a plurality of times, followed by a step of heating in an atmosphere containing oxygen to oxidize and remove the organic polymer component of the inorganic-organic hybrid compound.

12. The method of producing an inorganic oxide molded body according to Claim 1, wherein the inorganic oxide molded body is an electrolyte of a solid oxide fuel cell, an inorganic oxide coating membrane, a gas barrier material, or a high temperature observation window.
